Europäisches Patentamt

(19) European Patent Office

Office européen des brevets

(11) Numéro de publication : **0 291 378 B1**

# (12) FASCICULE DE BREVET EUROPEEN

(45) Date de publication du fascicule du brevet :
**16.10.91 Bulletin 91/42**

(51) Int. Cl.⁵ : **B24B 17/02, B24B 9/14,**
**B23Q 35/26**

(21) Numéro de dépôt : **88401022.4**

(22) Date de dépôt : **26.04.88**

(54) Appareil de lecture de contour, notamment pour monture de lunettes.

(30) Priorité : 28.04.87 FR 8706021

(43) Date de publication de la demande :
**17.11.88 Bulletin 88/46**

(45) Mention de la délivrance du brevet :
**16.10.91 Bulletin 91/42**

(84) Etats contractants désignés :
**BE DE ES FR GB IT**

(56) Documents cités :
**EP-A- 0 181 788**
**FR-A- 2 600 277**
**US-A- 3 786 600**

(73) Titulaire : **ESSILOR INTERNATIONAL, Cie**
**Générale d'Optique**
**1 Rue Thomas Edison, Echat 902**
**F-94028 Créteil Cédex (FR)**

(72) Inventeur : **Brulé, François**
**App. 1189 2 Allée Francis Garnier**
**F-93270 Sevran (FR)**
Inventeur : **Chansavoir, Alain**
**22 Rue Alexandre Bouché**
**F-77138 Luzancy (FR)**

(74) Mandataire : **CABINET BONNET-THIRION**
**95 Boulevard Beaumarchais**
**F-75003 Paris (FR)**

## Description

La présente invention concerne d'une manière générale les appareils de lecture de contour propres à "lire" une quelconque forme, et elle vise plus particulièrement le cas où il s'agit de relever le contour spécifique des cercles ou entourages d'une quelconque monture de lunettes en vue de la taille des lentilles ophtalmiques destinées à être montées dans ceux-ci.

Globalement, les appareils de lecture de contour usuellement mis en oeuvre à cet effet comportent un chariot, qui, porteur d'un palpeur destiné à s'appliquer à l'article dont le contour est à lire, et, donc, en l'espèce, propre à s'appliquer dans le fond du drageoir du cercle ou entourage de monture de lunettes à équiper, est susceptible d'un déplacement relatif, en coordonnées polaires ou cartésiennes par exemple, par rapport à une telle monture de lunettes.

Dans la demande de brevet européen No 0181788, par exemple, et suivant d'ailleurs un ensemble connu en soi, ce chariot est monté mobile en va-et-vient de manière passive sur un guide, sous le contrôle d'un simple ressort de rappel.

Deux difficultés, notamment, sont à surmonter dans la réalisation des appareils de lecture de contour de ce type.

La première a trait au fait que, malgré la capacité de déplacement qui doit être la sienne, le chariot ne doit appliquer qu'avec une force dosée, bien déterminée, contre le cercle ou entourage de monture de lunettes concerné, le palpeur qu'il porte, faute de quoi ce palpeur pourrait entraîner une déformation de ce cercle ou entourage préjudiciable à l'exactitude du relevé effectué.

La deuxième a trait au fait que, lorsque le cercle ou entourage concerné comporte localement des zones à variation rapide de courbure, comme cela est par exemple le cas pour une lentille ophtalmique en demi-lune ou en goutte d'eau, il n'est pas rare d'observer un coincement du palpeur dans de telles zones.

La présente invention a d'une manière générale pour objet une disposition propre à permettre de surmonter ces difficultés.

De manière plus précise, elle a pour objet un appareil de lecture de contour, notamment pour monture de lunettes, du genre comportant, pour le support d'un palpeur destiné à s'appliquer à l'article dont le contour est à lire, au moins un chariot, dit ci-après par simple commodité chariot "Y", monté mobile en va-et-vient sur un guide, cet appareil de lecture de contour étant d'une manière générale caractérisé en ce que au chariot "Y" est associé un chariot auxiliaire, qui est, lui aussi, monté mobile en va-et-vient, parallèlement au chariot "Y", en ce que le chariot "Y" est monté mobile en va-et-vient sur son guide sous le contrôle d'un moteur d'entraînement électrique dont l'alimentation électrique est asservie à des moyens de détection sensibles à un déplacement relatif entre le chariot auxiliaire et le chariot "Y", et en ce que, entre le palpeur et le moteur d'entraînement de chariot "Y", intervient un montage flottant mettant en oeuvre des moyens élastiques.

Grâce au montage flottant intervenant ainsi, suivant l'invention, entre le palpeur et le moteur d'entraînement qui est à l'origine de son déplacement, la force d'application suivant laquelle ce palpeur porte contre l'article à lire peut être exactement dosée.

En effet, ce montage flottant mettant en oeuvre des moyens élastiques par l'intermédiaire desquels se fait la poussée du moteur d'entraînement sur le palpeur, il suffit de choisir en conséquence ces moyens élastiques, et, corollairement, de piloter de manière correspondante le moteur d'entraînement.

Lorsque, à raison de la course d'engagement du palpeur au contact de l'article dont le contour est à lire, le déplacement relatif autorisé par le montage flottant atteint une valeur pour laquelle la force d'application suivant laquelle ce palpeur porte alors contre cet article atteint elle-même sa valeur maximale admissible, l'alimentation électrique du moteur d'entraînement est coupée.

Selon une forme de réalisation, qui est particulièrement simple et économique, le chariot auxiliaire constitue une première nacelle, qui, par les moyens élastiques dont résulte le montage flottant correspondant, est suspendue à une deuxième nacelle portée par le chariot "Y".

C'est donc dans un sens large que, au moins en ce qui concerne le chariot auxiliaire, il faut entendre ici le mot "chariot", ce mot n'impliquant pas nécessairement un guidage positif par un quelconque guide.

Mais, bien entendu, un tel guidage positif peut en variante aussi bien être envisagé pour le chariot auxiliaire, comme cela est déjà le cas pour le chariot "Y" auquel il est associé.

Quoi qu'il en soit, dans cette forme particulière de réalisation, c'est ce chariot auxiliaire qui porte le palpeur.

Il en résulte, avantageusement, que le montage flottant correspondant intervient au plus près de ce palpeur.

Ainsi, il ne concerne que la seule masse, relativement modérée, du chariot auxiliaire et du palpeur, sans être influencé par celle, beaucoup plus grande, des autres constituants en jeu.

Il en résulte un double avantage.

Tout d'abord, il est ainsi avantageusement possible de se satisfaire, à la fois, d'une part, d'une relative souplesse pour les moyens élastiques mis en oeuvre, ce qui est garant d'une bonne précision pour la force d'application maximale admissible à respecter entre le palpeur et l'article dont le contour est à lire, et, d'autre part, d'une vitesse d'avance relativement grande pour le chariot "Y" porteur de l'ensemble, ce qui permet de réduire en conséquence le temps de travail nécessaire pour la lecture de la totalité du contour concerné, alors même que ces deux exigences, de précision et de rapidité d'exécution, sont normalement contradictoires.

En outre, il permet avantageusement de minimiser l'incidence de la gravité sur le fonctionnement de l'ensemble, et, donc, d'incliner de manière ergonomique sur l'horizontale celui-ci, au bénéfice de sa facilité de mise en oeuvre.

Par ailleurs, pour un déplacement préférentiel en coordonnées cartésiennes du palpeur, le guide du chariot "Y" de l'appareil de lecture de contour suivant l'invention est avantageusement porté par un deuxième chariot, dit ici par simple commodité chariot "X", qui, sous le contrôle d'un moteur d'entraînement, est lui-même monté mobile en va-et-vient sur un guide orthogonal au précédent, avec, pour ce chariot "X", entre son moteur d'entrainement et le palpeur, un montage flottant de type semblable à celui du chariot "Y".

Il en résulte que, pour l'ensemble, se trouve disponible à tout instant un nombre élevé d'informations, et que, suivant diverses modalités pratiques d'exploitation envisageables, il est possible, grâce à celles-ci, d'assurer un pilotage convenable du palpeur quel que soit le contour du cercle ou entourage de monture de lunettes auquel il est appliqué, sans risque de coincement pour ce palpeur ni risque de déformation pour ce cercle ou entourage.

Au contraire, l'expérience montre qu'il est ainsi possible d'obtenir à tout instant un équilibre particulièrement satisfaisant des diverses forces en jeu au niveau du palpeur.

La figure 1 est une vue en perspective d'un appareil de lecture de contour suivant l'invention ;

la figure 2 en est, à échelle supérieure, une vue partielle en plan, suivant la flèche II de la figure 1 ;

la figure 3 est, à échelle encore supérieure, une vue partielle en coupe longitudinale de cet appareil de lecture de contour, suivant la ligne III-III de la figure 2 ;

la figure 4 en est une vue partielle en coupe transversale, suivant la ligne brisée IV-IV de la figure 3 ;

la figure 5 est, à échelle différente, et avec des arrachements locaux, une vue en perspective des principaux constituants de cet appareil de lecture de contour ;

la figure 6 est, suivant la flèche VI de la figure 5, une vue en plan illustrant ceux de ces constituants plus particulièrement concernés par le montage flottant caractéristique de cet appareil de lecture de contour ;

les figures 7 et 8 sont, à échelle différente, des vues en coupe, qui, analogues, chacune respectivement, à celles des figures 3 et 4, se rapportent à une variante de réalisation.

Ces figures illustrent, à titre d'exemple, l'application de l'invention à la lecture du contour de l'un ou de l'autre des cercles ou entourages 10 d'une quelconque monture de lunettes 11.

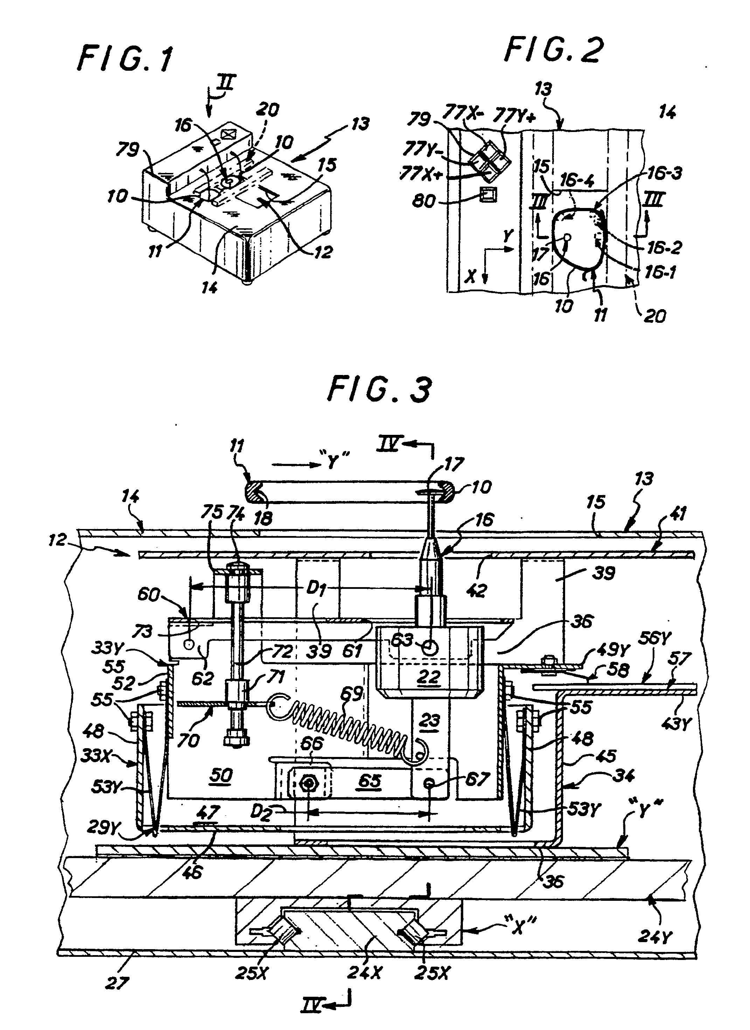

De manière connue en soi, l'appareil de lecture de contour 12 mis en oeuvre à cet effet comporte, dans un quelconque bâti 13, sur la platine de façade 14 duquel est à placer la monture de lunettes 11 concernée, un palpeur 16, qui, faisant saillie hors dudit bâti 13 à la faveur d'une large ouverture 15 de cette platine de façade 14, est destiné à s'appliquer, de l'intérieur, contre le cercle ou entourage 10 dont le contour est à relever, en présentant, en pratique, pour ce faire, une tête 17 propre à porter contre le drageoir 18 que comporte usuellement un tel cercle ou entourage 10, figure 3.

Bien entendu, et tel qu'il est schématisé en traits interrompus sur les figures 1 et 2, la platine de façade 14 du bâti 13 est équipée de moyens de maintien 20 propres à y assujettir de manière amovible une monture de lunettes 11.

Ne faisant pas partie, par eux-mêmes, de la présente invention, ces moyens de maintien 20 ne seront pas décrits ici.

Il en sera de même du bâti 13, dont la réalisation relève de l'homme de l'art.

Ne faisant pas partie, par lui-même, lui non plus, de la présente invention, le palpeur 16 ne sera pas non plus décrit en détail ici.

Il suffira d'indiquer que, dans les formes de réalisation représentées, ce palpeur 16 est porté par un codeur rotatif 22 propre à en apprécier la rotation et propre ainsi à permettre de connaître le périmètre du contour parcouru, et que ce codeur 22 présente, dans l'alignement du palpeur 16, mais du côté opposé à celui-ci, une queue 23.

Pour le support du palpeur 16, l'appareil de lecture de contour 12 suivant l'invention comporte au moins un chariot, dit ici par simple commodité chariot "Y", et désigné comme tel sur les figures, monté mobile en va-et-vient sur un guide 24Y, en pratique un guide rectiligne.

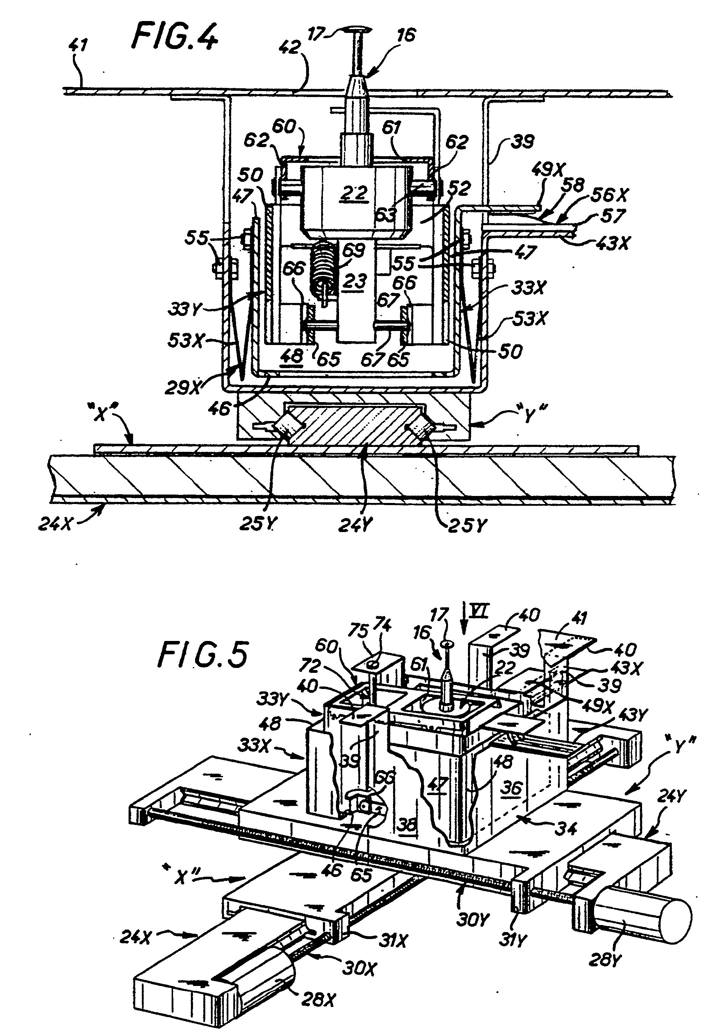

Entre le chariot "Y" et son guide 24Y, interviennent, dans la forme de réalisation représentée, et de part et d'autre, des roulements à rouleaux croisés 25Y, figure 4.

Pour une lecture de contour en coordonnées cartésiennes, le guide 24Y du chariot "Y" est porté par un deuxième chariot, dit ici par simple commodité chariot "X", qui est lui-même monté mobile en va-et-vient sur un guide 24X rectiligne et orthogonal au précédent, avec, interposition, de part et d'autre, de roulements à rouleaux croisés 25X, figure 3.

L'ensemble constitue une table à mouvements croisés XY.

Dans la forme de réalisation plus particulièrement représentée sur les figures 1 à 6, l'appareil de lecture de contour 12 suivant l'invention, pris dans son ensemble, est porté par le guide 24X de son chariot "X", ce guide 24X étant disposé en partie basse et solidaire de la semelle 27 du bâti 13 correspondant.

Dans cette forme de réalisation, la platine de façade 14 de ce bâti 13 s'étend parallèlement à sa semelle 27, et l'ensemble s'étend donc globalement horizontalement.

Suivant l'invention, le chariot "Y" est monté mobile en va-et-vient sur son guide 24Y sous le contrôle d'un moteur d'entraînement 28Y, et, entre le palpeur 16 et ce moteur d'entraînement 28Y, intervient, suivant des modalités décrites plus en détail ultérieurement, un montage flottant 29Y, figure 3.

De même, le chariot "X" est monté mobile en va-et-vient sur son guide 24X sous le contrôle d'un moteur d'entraînement 28X, et, entre ce moteur d'entraînement 28X et le palpeur 16, intervient un montage flottant 29X de type semblable au précédent, figure 4.

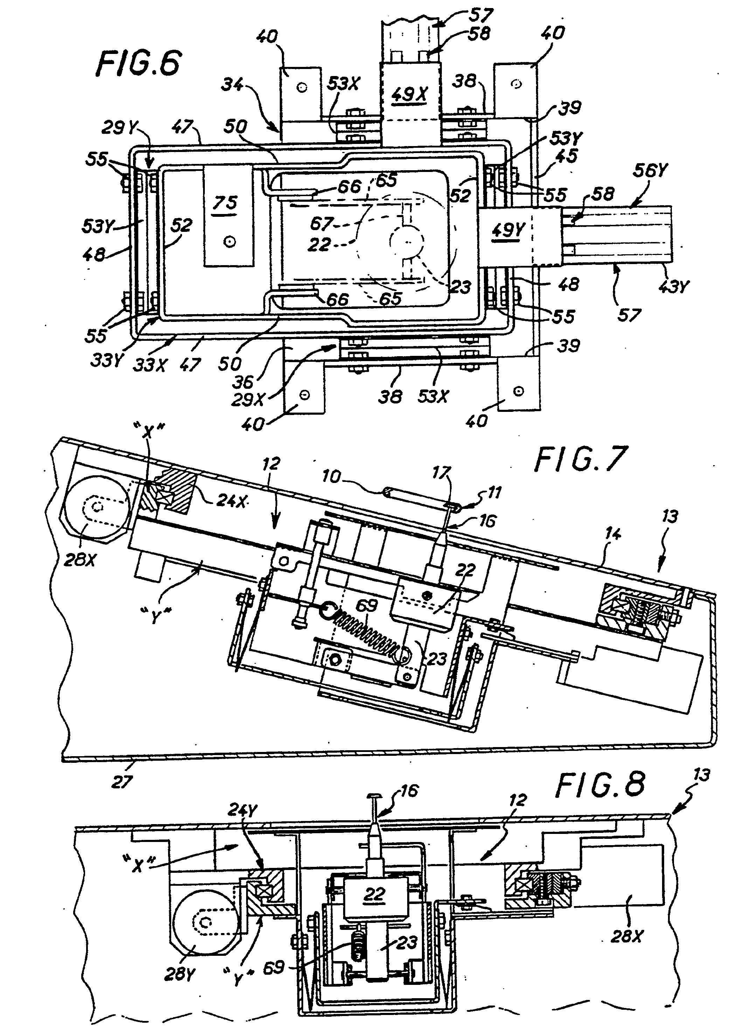

Par exemple, et tel que représenté, figure 5, le moteur d'entraînement 28Y du chariot "Y" est porté par le guide 24Y de celui-ci, et, par son arbre de sortie, il entraîne une tige filetée 30Y avec laquelle engrène un écrou 31Y solidaire de ce chariot "Y".

De même, le moteur d'entraînement 28X du chariot "X" est porté par le guide 24X de celui-ci, et, par son arbre de sortie, il entraîne une tige filetée 30X avec laquelle engrène un écrou 31X solidaire du chariot "X".

Relevant de l'homme de l'art, les dispositions correspondantes ne seront pas décrites plus en détail ici.

D'autres dispositions peuvent d'ailleurs être adoptées.

En pratique, le moteur d'entraînement 28Y du chariot "Y" est un moteur électrique, audit chariot "Y" est associé un chariot auxiliaire 33Y, qui est lui aussi monté mobile en va-et-vient, parallèlement au chariot "Y", et par l'intermédiaire duquel ledit moteur d'entraînement 28Y intervient sur le paleur 16, le montage flottant 29Y correspondant intervient entre ledit chariot auxiliaire 33Y et le chariot "Y", et l'alimentation électrique dudit moteur d'entraînement 28Y est asservie à des moyens de détection, qui, tels que décrits plus en détail ultérieurement, sont sensibles à un déplacement relatif entre ledit chariot auxiliaire 33Y et ledit chariot "Y".

De même, le moteur d'entraînement 28X du chariot "X" est un moteur électrique, audit chariot "X" est associé un chariot auxiliaire 33X, qui est lui aussi monté mobile en va-et-vient, parallèlement au chariot "X", et par l'intermédiaire duquel ledit moteur d'entraînement 28X intervient sur le palpeur 16, le montage flottant 29X correspondant intervient entre ledit chariot auxiliaire 33X et le chariot "X", et l'alimentation électrique dudit moteur d'entraînement 28X est asservie à des moyens de détection sensibles à un déplacement relatif entre ledit chariot auxiliaire 33X et ledit chariot "X".

Dans les formes de réalisation représentées, le chariot auxiliaire 33Y associé au chariot "Y" porte, suivant des modalités décrites plus en détail ultérieurement, le palpeur 16, et il constitue une première nacelle, qui, par des moyens élastiques dont résulte le montage flottant 29Y correspondant, est suspendue à une deuxième nacelle constituant, elle, le chariot auxiliaire 33X associé au chariot "X".

Par des moyens élastiques dont résulte le montage flottant 29X correspondant, cette deuxième nacelle est elle-même suspendue à un berceau 34 solidaire du chariot "Y".

Il y a ainsi, successivement emboîtés, du chariot "Y" au palpeur 16, le berceau 34, une nacelle constituant le chariot auxiliaire 33X, et une nacelle constituant le chariot auxiliaire 33Y, le chariot "Y" portant l'ensemble par l'intermédiaire du berceau 34.

Dans les formes de réalisation représentées, ce berceau 34 se présente sous la forme d'une pièce de configuration générale en U, qui, par sa semelle médiane 36, largement ajourée, est convenablement solidarisée, par exemple par des vis non représentées, au chariot "Y", et dont les ailes latérales 38 se prolongent chacune, à chacune de leurs extrémités, par des pattes 39 présentant toutes, à un même niveau, dirigé transversalement vers l'extérieur, un retour en équerre 40.

Sur les retours en équerre 40 que comporte ainsi le berceau 34 est rapporté, dans la forme de réalisation représentée, parallèlement à la platine de façade 14 du bâti 13, immédiatement en dessous de celle-ci, un cache 41, qui, présentant, pour la sortie du palpeur 16, une ouverture 42 de dimension largement moindre que celle de l'ouverture 15 de cette platine de façade 14, est destiné à occulter dans sa majeure partie cette ouverture 15 malgré les déplacements dans celle-ci de ce palpeur 16.

Pour des raisons qui apparaîtront ci-après, l'une des ailes latérales 38 du berceau 34 présente, à mi-hauteur, dans sa partie médiane, en saillie en équerre vers l'extérieur, parallèlement au guide 24X du chariot "X", une patte 43X.

De même, il est prévu, en saillie en équerre dans la zone médiane d'un retour en équerre 45 de la semelle 36 de ce berceau 34, parallèlement au guide 24Y du chariot "Y", une patte 43Y.

Dans les formes de réalisation représentées, le chariot auxiliaire 33X associé au chariot "X" se présente sous la forme générale d'un corps de boîte allongé parallèlement au guide 24Y du chariot "Y", entre les ailes latérales 38 du berceau 34 précédent, avec, du côté de ce chariot "Y", un fond 46, qui comporte de multiples ajours, et avec, parallèlement à ce guide 24Y, des parois longitudinales 47, et, parallèlement au guide 24X du chariot "X", des parois transversales 48.

Pour des raisons qui apparaîtront ci-après, celle des parois longitudinales 47 de ce chariot auxiliaire 33X qui est disposée du côté de la patte 43X du berceau 34 présente, en saillie en équerre en surplomb au-dessus de cette patte 43X, sensiblement parallèlement à celle-ci, une patte 49X.

Dans la forme de réalisation représentée, le chariot auxiliaire 33Y associé au chariot "Y", qui est disposé à l'intérieur du chariot auxiliaire 33X précédent, se présente sous la forme générale d'un cadre allongé comme ce dernier, avec des parois longitudinales 50 et des parois transversales 52.

Pour des raisons qui apparaîtront ci-après, celle de ces parois transversales 52 qui est disposée du côté de la patte 43Y du berceau 34 présente, en saillie en équerre vers l'extérieur, dans sa partie médiane, une patte 49Y, qui, s'étendant au-delà de la paroi transversale 48 correspondante du chariot auxiliaire 33X, surplombe, au moins pour partie, ladite patte 43Y, parallèlement à celle-ci.

Dans les formes de réalisation représentées, les moyens élastiques dont résulte l'un quelconque au moins des montages flottants 29X, 29Y, et en pratique chacun d'eux, comportent deux ressorts linéaires, respectivement 53X, 53Y qui, disposés chacun respectivement de part et d'autre du chariot auxiliaire 33X, 33Y concerné, sont dans l'alignement l'un de l'autre, parallèlement au guide 24X, 24Y du chariot "X", "Y" correspondant.

En pratique, chacun des ressorts linéaires 53X, 53Y ainsi mis en oeuvre est constitué par une lame de ressort, qui est pliée en V, avec son arête perpendiculaire au guide 24X, 24Y du chariot "X", "Y" correspondant, et dont les branches sont chacune respectivement assujetties, par des ensembles vis-écrou 55, aux organes concernés par le montage flottant 29X, 29Y correspondant.

Il y a ainsi, entre chacune des parois longitudinales 47 du chariot auxiliaire 33X et l'aile latérale 38 correspondante du berceau 34, un ressort linéaire 53X, et, entre chacune des parois transversales 52 du chariot auxiliaire 33Y et la paroi transversale 48 correspondante du chariot auxiliaire 33X, un ressort linéaire 53Y.

Si désiré, les branches latérales de ces ressorts linéaires 53X, 53Y peuvent être plus ou moins en rebroussement à compter de leur arête commune.

Dans les formes de réalisation représentées, les moyens de détection sensibles à un déplacement relatif entre un chariot auxiliaire 33X, 33Y et le chariot "X", "Y" correspondant sont constitués par un potentiomètre, respectivement 56X, 56Y, intervenant entre la patte 43X, 43Y correspondante du berceau 34 et la patte 49X, 49Y d'un tel chariot auxiliaire 33X, 33Y.

En pratique, chacun des potentiomètres 56X, 56Y ainsi mis en oeuvre comporte, dans ces formes de réalisation, un support 57, qui est fixé à la patte 43X, 43Y concernée du berceau 34, et qui présente deux pistes, et un curseur 58, qui est fixé à la patte 49X, 49Y du chariot auxiliaire 33X, 33Y correspondant, et qui porte par deux doigts sur les deux pistes précédentes.

Comme indiqué précédemment, le chariot auxiliaire 33Y associé au chariot "Y" porte le palpeur 16.

Dans les formes de réalisation représentées, il porte ce palpeur 16 par l'intermédiaire d'un parallélogramme déformable à bras inégaux, ce parallélogramme déformable étant constitué, d'une part, d'une palette 60, qui, ajourée d'un évidement 61 pour le passage du palpeur 16, est articulée, à l'une de ses extrémités, par des oreilles 62, au chariot auxiliaire 33Y, à la partie supérieure de celui-ci, et, à l'autre de ses extrémités, par un axe 63, au codeur 22 portant le palpeur 16, et, d'autre part, de deux biellettes 65, qui, articulées, à l'une de leurs extrémités, à des oreilles 66 prévues à cet effet à la partie inférieure de ce chariot auxiliaire 33Y, sont articulées, par un axe 67, à leur autre extrémité, à la queue 23 dont est soliaire ce codeur 22.

La distance D1 séparant les axes d'articulation de la palette 60 est supérieure à celle D2 séparant les axes d'articulation des biellettes 65.

Ces axes d'articulation, tous parallèles entre eux, sont parallèles au plan suivant lequel se déplacent les chariots "X", "Y", à supposer confondus les plans de déplacement, en pratique étagés, de ceux-ci.

Il résulte du parallélogramme déformable à bras inégaux ainsi réalisé, communément appelé parallélogramme de WATT, que la capacité de déplacement du palpeur 16 perpendiculairement au plan précédent est quasi linéaire.

De préférence, et tel que représenté, entre le palpeur 16 et le chariot auxiliaire 33Y qui le porte interviennent des moyens élastiques d'équilibrage propres à un soutien élastique de ce palpeur 16.

Dans les formes de réalisation représentées, ces moyens élastiques d'équilibrage comportent, et, en pratique sont constitués par, un ressort 69, du type ressort à boudin, qui, attelé au palpeur 16, à l'une de ses extrémités, et, plus précisément, à la queue 23 du codeur 22 portant ce palpeur 16, est, à l'autre de ses extrémités, attelé à une plaquette 70 montée réglable en position sur le chariot auxiliaire 33Y sensiblement parallèlement à l'axe dudit palpeur 16.

Pour son réglage en position, cette plaquette 70 est solidaire d'une douille formant écrou 71 avec laquelle engrène une tige filetée 72 qui, traversant la palette 60 à la faveur d'un évidement 73 de celle-ci, est, au-delà de cette palette 60, montée rotative, par sa tête 74, sur une patte 75 venue d'une des parois longitudinales 50 du chariot auxiliaire 33Y et perpendiculaire à celle-ci.

En agissant en rotation en conséquence sur la tête 74 de la tige filetée 72, la plaquette 70 monte ou descend, ce qui modifie la tension du ressort 69.

En ajustant ainsi cette tension, il peut être fait en sorte que le palpeur 16 soit en équilibre quasi indifférent.

Il résulte de ce qui précède, que, tel que schématisé par des flèches X, Y sur la figure 2, le berceau 34 porteur, indirectement, du palpeur 16, et donc ce palpeur 16, sont mobiles suivant deux directions X, Y orthogonales, sous le contrôle des moteurs d'entraînement 28X, 28Y correspondants.

Quatre boutons poussoirs de commande 77X +, 77X –, 77Y + et 77Y –, disposés en croix, à la disposition de l'usager, sur un caisson 79 s'étendant transversalement en saillie, en bandeau, sur la platine de façade 14 du bâti 13, à l'une des extrémités de celle-ci, permettent de commander, dans un sens, ou dans l'autre, ces moteurs d'entraînement 28X, 28Y, et donc de déplacer, dans un sens, ou dans l'autre, suivant l'axe X ou suivant l'axe Y, le berceau 34 porteur du palpeur 16.

Corollairement, à chaque chariot "X", "Y" il est associé un moyen propre à une prise d'information relative à son déplacement.

Dans les formes de réalisation représentées, et de manière très simple, ce moyen de prise d'information résulte de ce que les moteurs d'entraînement 28X, 28Y mis en oeuvre sont des moteurs codés, c'est-à-dire des moteurs auxquels est associé de manière intégrante un codeur permettant d'en repérer la rotation.

Mais, en variante, des codeurs spécifiques peuvent être associés directement aux chariots "X", "Y.

Par exemple, de tels codeurs peuvent engréner avec des crémaillères solidaires de ces chariots.

Quoi qu'il en soit, deux informations sont ainsi disponibles pour chacun des chariots "X", "Y", l'une correspondant à son déplacement dans un sens, l'autre correspondant à son déplacement dans un sens opposé au précédent.

Il résulte également de ce qui précède que, indépendamment des déplacements précédents, et conjointement avec ceux-ci, le chariot auxiliaire 33Y directement porteur du palpeur 16, et donc ce palpeur 16, sont également mobiles, dans un sens ou dans l'autre, et suivant l'une ou l'autre des deux directions X, Y orthogonales précédentes, par rapport au berceau 34, et donc par rapport aux chariots "X", "Y", dans les limites des montages flottants 29X, 29Y correspondants.

Les prises d'information correspondantes se font, alors, par les potentiomètres 56X, 56Y correspondants.

Les diverses informations de déplacement, et donc de position, ainsi disponibles sont dûment traitées par une unité de pilotage, qui, non représentée, trouve son logement à l'intérieur du bâti 13, et qui, ne relevant pas de la présente invention, ne sera pas décrite ici.

Il suffira d'indiquer que cette unité de pilotage a pour fonction d'assurer une commande automatique, dans un sens ou dans l'autre, de l'un et/ou de l'autre des moteurs d'entraînement 28X, 28Y, et, donc, un déplacement, dans un sens ou dans l'autre, de l'un et/ou de l'autre des chariots "X", "Y", propre à permettre au palpeur 16 de suivre n'importe quel contour, et, notamment, tel que schématisé à la figure 2, celui d'un cercle ou entourage 10 d'une monture de lunettes 11.

Par exemple, les montages flottants 29X, 29Y mis en oeuvre suivant l'invention permettant de connaître en permanence le module et le sens des composantes, sur les directions X, Y, de la force d'application suivant laquelle le palpeur 16 est au contact de ce contour, l'unité de pilotage élabore, à partir de ces deux composantes de force, deux composantes de déplacement, l'une normale à ce contour, l'autre perpendiculaire à celui-ci.

Suivant que la force d'application est trop forte ou trop faible, la composante de déplacement normale du contour correspond à un retrait, ou à une avancée, par rapport à ce contour.

Si la force d'application est égale à la force maximale consigne imposée, le palpeur 16 ne bouge pas.

Corollairement, la composante de déplacement tangentielle assure le déplacement du palpeur 16 suivant le contour concerné.

En pratique, l'unité de pilotage fait une addition de ces deux composantes de déplacement, de manière à générer, pour le palpeur 16, un mouvement régulier d'asservissement au contour qu'il a à charge de lire, et, simultanément, un mouvement régulier d'avance le long de ce contour.

Cela étant, il suffit, pour l'opérateur, d'engager sur le palpeur 16, le cercle ou entourage 10 à lire de la monture de lunettes 11 concernée, tel que schématisé en trait plein sur la figure 2, puis, en agissant en conséquence sur tel ou tel des boutons poussoirs de commande 77X +, 77X –, 77Y +, 77Y -, d'amener ce palpeur 16 au contact de ce cercle ou entourage 10, en un point quelconque de celui-ci, tel que schématisé en traits interrompus $16_1$ sur cette figure 2, et, enfin, d'initier un cycle de travail, par action sur un bouton poussoir de commande 80 également prévu à cet effet sur le caisson 79 du bâti 13.

Du fait de cette initialisation, et sous le contrôle de l'unité de pilotage prévue à cet effet, le palpeur 16 décrit alors de lui-même le contour du cercle ou entourage 10 concerné, tel que schématisé en traits interrompus $16_2$, $16_3$, $16_4$ sur la figure 2.

Il est en effet fait en sorte que la force suivant laquelle le palpeur 16 est initialement appliqué à ce cercle ou entourage 10 est sans incidence sur la suite des opérations.

Dans la variante de réalisation illustrée par les figures 7 et 8, l'appareil de lecture de contour 12 suivant l'invention, pris dans son ensemble, est suspendu au guide 24X de son chariot "X", ce guide 24X tant disposé en partie haute et étant lui-même solidaire de la platine de façade 14 du bâti 13.

Ainsi libéré, en partie basse, et du fait de sa relative insensibilité à la gravité, l'appareil de lecture de contour 12 suivant l'invention peut avantageusement être incliné par rapport à la semelle 27 de son bâti 13.

Il en est dès lors de même de la platine de façade 14 de celui-ci.

Le domaine d'application de la présente invention, ne se limite pas nécessairement à celui de la seule lecture d'un contour concave, comme cela est le cas pour le contour des cercles ou entourages d'une monture de lunettes.

Il peut au contraire tout aussi bien s'étendre à la lecture d'un contour convexe, comme cela est le cas de celui des gabarits correspondants, ou des verres eux-mêmes lorsqu'il s'agit de procéder au remplacement d'un tel verre.

D'une manière plus générale, le domaine d'application de l'invention s'étend à la lecture du contour de n'importe quel article.

**Revendications**

1. Appareil de lecture de contour, notamment pour monture de lunettes, du genre comportant, pour le support d'un palpeur (16) destiné à s'appliquer à l'article dont le contour est à lire, au moins un chariot, dit ci-après par simple commodité chariot "Y", monté mobile en va-et-vient sur un guide (24Y), caractérisé en ce que au chariot "Y" est associé un chariot auxiliaire (33Y), qui est, lui aussi, monté mobile en va-et-vient, parallèlement au chariot "Y", en ce que le chariot "Y" est monté mobile en va-et-vient sur son guide (24Y) sous le contrôle d'un moteur d'entraînement électrique (28Y) dont l'alimentation électrique est asservie à des moyens de détection sensibles à un déplacement relatif entre ledit chariot auxiliaire (33Y) et ledit chariot "Y", et en ce que, entre le palpeur (16) et ledit moteur d'entraînement (28Y), intervient un montage flottant (29Y) mettant en oeuvre des moyens élastiques.

2. Appareil de lecture de contour suivant la revendication 1, caractérisé en ce que le chariot auxiliaire (33Y) porte le palpeur (16).

3. Appareil de lecture de contour suivant la revendication 2, caractérisé en ce que le chariot auxiliaire (33Y) porte le palpeur (16) par l'intermédiaire d'un parallélogramme déformable (60, 65) à bras inégaux, et, entre ledit chariot auxiliaire (33Y) et ledit palpeur (16) interviennent des moyens élastiques d'équilibrage propres à un soutien élastique dudit palpeur (16).

4. Appareil de lecture de contour suivant la revendication 3, caractérisé en ce que lesdits moyens élastiques d'équilibrage comportent un ressort (69) qui, attelé au palpeur (16) à l'une de ses extrémités, est, à l'autre de ses extrémités, attelé à une plaquette (70)

montée réglable en position sur le chariot auxiliaire (33Y) sensiblement parallèlement à l'axe dudit palpeur (16).

5. Appareil de lecture de contour suivant l'une quelconque des revendications 1 à 4, caractérisé en ce que le chariot auxiliaire (33Y) constitue une première nacelle, qui, par les moyens élastiques dont résulte le montage flottant (29Y) correspondant, est suspendue à une deuxième nacelle (33X) portée par le chariot "Y".

6. Appareil de lecture de contour suivant l'une quelconque des revendications 1 à 5, caractérisé en ce que le moteur d'entraînement (28Y) du chariot "Y" est porté par le guide (24Y) de celui-ci, et il entraîne une tige filetée (30Y) avec laquelle engrène un écrou (31Y) solidaire de ce chariot "Y".

7. Appareil de lecture de contour suivant l'une quelconque des revendications 1 à 6, caractérisé en ce que le guide (24Y) du chariot "Y" est porté par un deuxième chariot, dit ci-après par simple commodité chariot "X", qui, sous le contrôle d'un moteur d'entraînement (28X), est lui-même monté mobile en va-et-vient sur un guide (24X) orthogonal au précédent, avec, pour ce chariot "X" entre son moteur d'entraînement (28X) et le palpeur (16), un montage flottant (29X) de type semblable à celui du chariot "Y".

8. Appareil de lecture de contour suivant la revendication 7, caractérisé en ce que le moteur d'entraînement (28X) du chariot "X" est un moteur électrique, audit chariot "X" est associé un chariot auxiliaire (33X), qui est lui aussi monté mobile en va-et-vient, parallèlement au chariot "X", et par l'intermédiaire duquel ledit moteur d'entraînement (28X) intervient sur le palpeur (16), le montage flottant (29X) correspondant intervient entre ledit chariot auxiliaire (33X) et le chariot "X", et l'alimentation électrique dudit moteur d'entraînement (28X) est asservie à des moyens de détection sensibles à un déplacement relatif entre ledit chariot auxiliaire (33X) et ledit chariot "X".

9. Appareil de lecture de contour suivant les revendications 5 et 8, prises conjointement, caractérisé en ce que le chariot auxiliaire (33X) associé au chariot "X" est constitué par la deuxième nacelle (33X) portée par le chariot "Y", et, par les moyens élastiques dont résulte le montage flottant (29X) correspondant, cette deuxième nacelle (33X) est suspendue à un berceau (34) solidaire dudit chariot "Y".

10. Appareil de lecture de contour suivant l'une quelconque des revendications 8, 9, caractérisé en ce que le moteur d'entraînement (28X) du chariot "X" est porté par le guide (24X) de celui-ci, et il entraîne une tige filetée (30X) avec laquelle engrène un écrou (31X) solidaire de ce chariot "X".

11. Appareil de lecture de contour suivant l'une quelconque des revendications 5, 9, caractérisé en ce que les moyens élastiques dont résulte un montage flottant (29X, 29Y) comportent deux ressorts linéaires (53X, 53Y), qui, disposés chacun respectivement de part et d'autre du chariot auxiliaire (33X, 33Y) concerné, sont dans l'alignement l'un de l'autre, parallèlement au guide (24X, 24Y) du chariot "X", "Y" correspondant.

12. Appareil de lecture de contour suivant la revendication 11, caractérisé en ce que chacun desdits ressorts linéaires (53X, 53Y) est constitué par une lame de ressort, qui est pliée en V, et dont les branches sont chacune respectivement assujetties aux organes concernés par le montage flottant (29X, 29Y) correspondant.

13. Appareil de lecture de contour suivant l'une quelconque des revendications 1, 8, caractérisé en ce que les moyens de détection sensibles à un déplacement relatif entre un chariot auxiliaire (33X, 33Y) et le chariot "X", "Y" correspondant sont constitués par un potentiomère (56X, 56Y).

14. Appareil de lecture de contour suivant la revendication 7, caractérisé en ce que, pris dans son ensemble, il est porté par le guide (24X) de son chariot "X", ce guide (24X) étant disposé en partie basse et solidaire de la semelle (27) d'un quelconque bâti (13).

15. Appareil de lecture de contour suivant la revendication 7, caractérisé en ce que, pris dans son ensemble, il est suspendu au guide (24X) de son chariot "X", ce guide étant disposé en partie haute et solidaire de la platine de façade (14) d'un quelconque bâti (13).

16. Appareil de lecture de contour suivant la revendication 15, caractérisé en ce que, pris dans son ensemble, il est incliné par rapport à la semelle (27) du bâti (13).

17. Appareil de lecture de contour suivant l'une quelconque des revendications 1, 8, caractérisé en ce qu'un moteur d'entraînement (28X, 28Y) est un moteur codé.

**Claims**

1. A contour reading apparatus, in circular for a spectacles frame, of the comprising, for the support of a feeler (16) which is intended to be applied to the article of which the contour is to be read, at least one carriage, referred to hereinafter just for the sake of convenience as the carriage 'Y', which is mounted reciprocatably on a guide (24Y), characterised in that associated with the carriage 'Y' is an auxiliary carriage (33Y) which is also mounted reciprocatably parallel to the carriage 'Y', that the carriage 'Y' is mounted reciprocatably on its guide (24Y) under the control of an electric drive motor (28Y), the electrical power supply to which is controlled in dependence on detection means which are sensitive to a relative displacement as between said auxiliary carriage (33Y) and said carriage 'Y', and that a floating mounting (29Y) using resilient means is disposed between the feeler (16) and said drive motor (28Y).

2. A contour reading apparatus according to claim 1 characterised in that the auxiliary carriage (33Y) carries the feeler (16).

3. A contour reading apparatus according to claim 2 characterised in that the auxiliary carriage (33Y) carries the feeler (16) by way of a deformable parallelogram (60, 65) with unequal arms and resilient balancing means for resiliently supporting said feeler (16) are disposed between said auxiliary carriage (33Y) and said feeler (16).

4. A contour reading apparatus according to claim 3 characterised in that said resilient balancing means comprise a spring (69) which, connected to the feeler (16) at one of its ends, is connected at the other of its ends to a plate (70) which is mounted adjustably in position on the auxiliary carriage (33Y) in substantially parallel relationship with the axis of said feeler (16).

5. A contour reading apparatus according to any one of claims 1 to 4 characterised in that the auxiliary carriage (33Y) constitutes a first casing body which, by the resilient means providing the corresponding floating mounting (29Y), is suspended from a second casing body (33X) which is carried by the carriage 'Y'.

6. A contour reading apparatus according to any one of claims 1 to 5 characterised in that the drive motor (28Y) of the carriage 'Y' is carried by the guide (24Y) thereof and it drives a screxthreaded rod (30Y) with which meshes a nut (31Y) which is fixed with respect to said carriage 'Y'.

7. A contour reading apparatus according to any one of claims 1 to 6 characterised in that the guide (24Y) of the carriage 'Y' is carried by a second carriage, referred to hereinafter simply for the sake of convenience as the carriage 'X', which, under the control of a drive motor (28X), is itself mounted reciprocatably on a guide (24X) which is orthogonal to the previous one, with, for said carriage 'X', between its drive motor (28X) and the feeler (16), a floating mounting (29X) of a type similar to that of the carriage 'Y'.

8. A contour reading apparatus according to claim 7 characterised in that the drive motor (28X) of the carriage 'X' is an electric motor, associated with said carriage 'X' is an auxiliary carriage (33X) which is also mounted reciprocatably parallel to the carriage 'X' and by means of which said drive motor (28X) acts on the feeler (16), the corresponding floating mounting (29X) is disposed between said auxiliary carriage (33X) and the carriage 'X', and the electrical power supply for said drive motor (28X) is controlled in dependence on detection means sensitive to a relative displacement between said auxiliary carriage (33X) and said carriage 'X'.

9. A contour reading apparatus according to claims 5 and 8 in combination characterised in that the auxiliary carriage (33X) assiciated with the carriage 'X' is formed by the second casing body (33X) carried by the carriage 'Y' and said second casing body (33X) is suspended by the resilient means providing the corresponding floating mounting (29X) from a cradle (34) which is fixed with respect to said carriage 'Y'.

10. A contour reading apparatus according to either one of claims 8 and 9 characterised in that the drive motor (28X) of the carriage 'X' is carried by the guide (24X) thereof and it drives a screwthreaded rod (30X) with which meshes a nut (31X) which is fixed with respect to said carriage 'X'.

11. A contour reading apparatus according to either one of claims 5 and 9 characterised in that the resilient means providing a floating mounting (29X, 29Y) comprise two linear springs (53X, 53Y) which, each disposed on respective sides of the auxiliary carriage (33X, 33Y) in question, are in alignment with each other, in parallel relationship with the guide (24X, 24Y) of the corresponding carriage 'X', 'Y'.

12. A contour reading apparatus according to claim 11 characterised in that each of said linear springs (53X, 53Y) is formed by a spring blade which is bent in a V-shape and the limbs of which are each respectively fixed to the members involved with the corresponding floating mounting (29X, 29Y).

13. A contour reading apparatus according to either one of claims 1 and 8 characterised in that the detection means which are sensitive to a relative displacement as between an auxiliary carriage (33X, 33Y) and the corresponding carriage 'X', 'Y' are formed by a potentiometer (56X, 56Y).

14. A contour reading apparatus according to claim 7 characterised in that, taken overall, it is carried by the guide (24X) of its carriage 'X', said guide (24X) being disposed in the lower part and fixed with respect to the base plate (27) of any frame structure (13).

15. A contour reading apparatus according to claim 7 characterised in that, taken overall, it is suspended from the guide (24X) of its carriage 'X', said guide being disposed in the upper part and fixed with respect to the front plate (14) of any from structure (13).

16. A contour reading apparatus according to claim 15 characterised in that, taken overall, it is inclined with respect to the base plate (27) of the from structure (13).

17. A contour reading apparatus according to either one of claims 1 and 8 characterised in that a drive motor (28X, 28Y) is a coded motor.


**Patentansprüche**

1. Kontur-Abtastvorrichtung, insbesondere für Brillengestell, von dem Typ, der zur Halterung eines Taststifts (16), der zur Auflage auf den abzutastenden Gegenstand bestimmt ist, wenigstens einen Schlitten aufweist, der nachstehend als Schlitten "Y" bezeichnet ist und auf einer Führung (24Y) hin- und hergehend gelagert ist, dadurch **gekennzeichnet**, daß mit dem Schlitten "Y" ein Hilfsschlitten (33Y) verbunden ist, der ebenfalls hin- und hergehend gelagert ist, und zwar parallel zum Schlitten "Y", daß der Schlitten "Y" hin- und hergehend auf seiner Führung (24Y) gelagert ist unter der Steuerung eines elektrischen Antriebsmotors (28Y), dessen elektrische Versorgung gesteuert wird von Erfassungsmitteln, die auf eine relative Verschiebung zwischen dem Hilfsschlitten (33Y) und dem Schlitten "Y" empfindlich sind, und daß zwischen dem Taststift (16) und dem Antriebsmotor (28Y) eine schwebende Befestigung (29Y) wirkt, die die elastischen Einrichtungen in Betrieb setzt.

2. Kontur-Abtastvorrichtung nach Anspruch 1, dadurch **gekennzeichnet**, daß der Hilfsschlitten (33Y) den Taststift (16) trägt.

3. Kontur-Abtastvorrichtung nach Anspruch 2, dadurch **gekennzeichnet**, daß der Hilfsschlitten (33Y) den Taststift (16) vermittels einer verformbaren Parallelführung (60, 65) mit ungleichen Schenkeln trägt, und zwischen dem Hilfsschlitten (33Y) und dem Taststift (16) elastische Ausgleichseinrichtungen wirken, die für eine elastische Unterstützung des Taststifts (16) geeignet sind.

4. Kontur-Abtastvorrichtung nach Anspruch 3, dadurch **gekennzeichnet**, daß die elastischen Ausgleichseinrichtungen eine Feder (69) aufweisen, die an den Taststift (16) mit einem ihrer Enden angekoppelt ist und mit dem anderen ihrer Enden an ein Plättchen (70) angekoppelt ist, das auf dem Hilfsschlitten (33Y) im wesentlichen parallel zur Achse des Taststifts (16) einstellbar angebracht ist.

5. Kontur-Abtastvorrichtung nach einem der Ansprüche 1 bis 4, dadurch **gekennzeichnet**, daß der Hilfsschlitten (33Y) ein erstes Schiffchen aufweist, das vermittels der elastischen Einrichtungen, aufgrund derer die entsprechende schwebende Befestigung (29Y) entsteht, an einem zweiten Schiffchen (33X) aufgehängt ist, das von dem Schlitten "Y" getragen wird.

6. Kontur-Abtastvorrichtung nach einem der Ansprüche 1 bis 5, dadurch **gekennzeichnet**, daß der Antriebsmotor (28Y) des Schlittens "Y" durch seine Führung (24Y) getragen wird und er eine Gewindestange (30Y) antreibt, mit der eine Schraubenmutter (31Y) in Eingriff steht, welche mit dem Schlitten "Y" einstückig ausgebildet ist.

7. Kontur-Abtastvorrichtung nach einem der Ansprüche 1 bis 6, dadurch **gekennzeichnet**, daß die Führung (24Y) des Schlittens "Y" durch einen zweiten Schlitten getragen wird, der nachstehend als "X" bezeichnet wird, der unter der Steuerung eines Antriebsmotors (28X) ebenfalls hin und hergehend auf einer Führung (24X) gelagert ist, die senkrecht zu der vorangegangenen ist, wobei für den Schlitten "X" zwischen seinem Antriebsmotor (28X) und dem Taststift (16) eine schwebende Befestigung (29X) von ähnlichem Typ wie für den Schlitten "Y" vorgesehen ist.

8. Kontur-Abtastvorrichtung nach Anspruch 7, dadurch **gekennzeichnet**, daß der Antriebsmotor (28X) des Schlittens "X" ein elektrischer Motor ist, wobei mit dem Schlitten "X" ein Hilfsschlitten (33X) verbunden ist, der ebenfalls hin- und hergehend gelagert ist, und zwar parallel zum Schlitten "X", und vermittels dessen der Antriebsmotor (28X) auf den Taststift (16) wirkt, wobei die entsprechende schwebende Befestigung (29X) zwischen dem Hilfsschlitten (33X) und dem Schlitten "X" wirkt, und die elektrische Versorgung des Antriebsmotors (28X) von Erfassungseinrichtungen gesteuert wird, die auf eine relative Verschiebung zwischen dem Hilfsschlitten (33X) und dem Schlitten "X" empfindlich sind.

9. Kontur-Abtastvorrichtung nach den Ansprüchen 5 bis 8, in Verbindung, dadurch **gekennzeichnet**, daß der mit dem Schlitten "X" verbundene Hilfsschlitten (33X) gebildet wird durch das zweite Schiffchen (33X), das durch den Schlitten "X" getragen wird und durch elastische Einrichtungen, aufgrund derer die entsprechende schwebende Befestigung (29X) entsteht, wobei das zweite Schiffchen (33X) an einem Träger (34) aufgehängt ist, der mit Schlitten "Y" einstückig ausgebildet ist.

10. Kontur-Abtastvorrichtung nach einem der Ansprüche 8, 9, dadurch **gekennzeichnet**, daß der Antriebsmotor (28X) des Schlittens "X" durch seine Führung (24X) getragen wird, und er eine Gewindestange (30X) antreibt, mit der eine Schraubenmutter (31X) in Eingriff ist, welche mit dem Schlitten "X" einstückig ausgebildet ist.

11. Kontur-Abtastvorrichtung nach einem der Ansprüche 5, 9, dadurch **gekennzeichnet**, daß die elastischen Einrichtungen, aus denen eine schwebende Befestigung (29X, 29Y) entsteht, zwei lineare Federn (53X, 53Y) aufweisen, die jeweils auf der einen und der anderen Seite des betreffenden Hilfsschlittens (33X, 33Y) angeordnet sind und in gegenseitiger Ausrichtung parallel zur Führung (24X, 24Y) des entsprechenden Schlittens "X", "Y" sind.

12. Kontur-Abtastvorrichtung nach Anspruch 11, dadurch **gekennzeichnet**, daß jede der linearen Federn (53X, 53Y) durch eine Blattfeder gebildet wird, die in V-Form gebogen ist und deren Abschnitte jeweils an Organen befestigt sind, die durch die entsprechende schwebende Befestigung (29X, 29Y) betroffen sind.

13. Kontur-Abtastvorrichtung nach einem der Ansprüche 1, 8, dadurch **gekennzeichnet**, daß die Erfassungseinrichtungen, die auf eine relative Verschiebung zwischen einem Hilfsschlitten (33X, 33Y) und dem entsprechenden Schlitten "X", "Y" empfindlich sind, durch ein Potentiometer (56X, 56Y) gebildet werden.

14. Kontur-Abtastvorrichtung nach Anspruch 7, dadurch **gekennzeichnet**, daß sie in ihrer Gesamtheit getragen wird durch die Führung (24X) ihres Schlittens "X", wobei die Führung (24X) im unteren Teil und einstückig mit der Fußplatte (27) eines beliebigen Rahmens (13) angeordnet ist.

15. Kontur-Abtastvorrichtung nach Anspruch 7, dadurch **gekennzeichnet**, daß sie in ihrer Gesamtheit aufgehängt ist an der Führung (24X) ihres Schlittens "X", wobei die Führung im oberen Teil und einstückig mit der Vorderplatte (14) eines beliebigen Rahmens (13) angeordnet ist.

16. Kontur-Abtastvorrichtung nach Anspruch 15, dadurch **gekennzeichnet**, daß sie in ihrer Gesamtheit bezüglich der Fußplatte (27) des Rahmens (13) geneigt ist.

17. Kontur-Abtastvorrichtung nach einem der Ansprüche 1, 8, dadurch **gekennzeichnet**, daß der Antriebsmotor (28X, 28Y) ein kodierter Motor ist.

FIG.1

FIG.2

FIG.3

FIG.4

FIG.5

FIG.6

FIG.7

FIG.8